# EUROPÄISCHE PATENTSCHRIFT

(11) **EP 3 402 966 B1**
(45) Veröffentlichungstag und Bekanntmachung des Hinweises auf die Patenterteilung: **16.10.2019**
(21) Anmeldenummer: 16809701.2
(22) Anmeldetag: 06.12.2016
(51) Int. Cl.: F01N 3/30, F01N 3/22, F01N 13/00

(54) **SEKUNDÄRLUFTVENTIL FÜR EINEN VERBRENNUNGSMOTOR**
SECONDARY AIR VALVE FOR AN INTERNAL COMBUSTION ENGINE
SOUPAPE À AIR SEDONDAIRE POUR MOTEUR À COMBUSTION INTERNE

(30) Priorität: 13.01.2016 DE 102016100501
(43) Veröffentlichungstag der Anmeldung: 21.11.2018
(73) Patentinhaber: Pierburg GmbH, 41460 Neuss (DE)
(72) Erfinder: BOUTROS-MIKHAIL, Matthias, 41460 Neuss (DE); WENDEL, Guido, 41169 Mönchengladbach (DE)
(74) Vertreter: Patentanwälte ter Smitten Eberlein-Van Hoof Rütten Partnerschaftsgesellschaft mbB
(86) Internationale Anmeldenummer: PCT/EP2016/079824
(87) Internationale Veröffentlichungsnummer: WO 2017/121541

(56) Entgegenhaltungen:
- WO-A1-2011/082887
- DE-A1-102008 050 252
- US-A1- 2005 204 732

## Beschreibung

Die Erfindung betrifft ein Sekundärluftventil für einen Verbrennungsmotor.

Sekundärluftpumpen werden im Stand der Technik dazu verwendet, Sekundärluft in die Abgasleitung einer Verbrennungskraftmaschine vor dem Katalysator einzubringen. Dies erfolgt in erster Linie solange der Katalysator noch kalt ist durch Einblasen von Sekundärluft in den Abgaskrümmer, wodurch eine exotherme Oxidation von unverbrannten Kohlenstoffenwasserstoffen bewirkt wird. Die Emissionen in der Kaltstartphase werden somit verringert. Gleichzeitig erwärmt sich der Katalysator durch die Wärme die durch die exotherme Reaktion entsteht schneller, sodass er schneller höhere Umwandlungsraten erreichen kann.

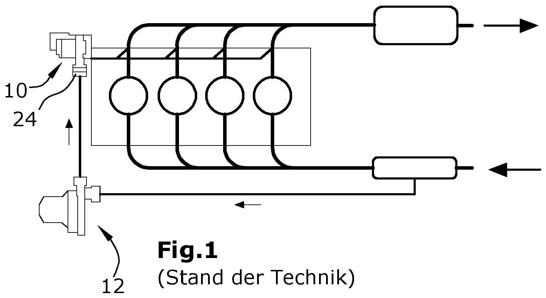

Die aus dem Stand der Technik bekannte Funktion einer Sekundärluftpumpe ist beispielhaft in Figur 1 dargestellt. Hinter der Sekundärluftpumpe 12 ist ein Sekundärluftventil 10 angeordnet, das die Aufgabe hat, die in den Abgasstrom geförderte Luftmenge zu regeln und eine Rückströmung von Abgasen in die Sekundärluftpumpe oder die Umgebung zu verhindern. Zusätzlich soll keine Luft in das Abgassystem einströmen, wenn die Sekundärluftpumpe nicht betrieben wird.

Die Funktion einer elektrischen Sekundärluftpumpe und eines Sekundärluftventils sind beispielsweise beschrieben in: http://www.kspg.com/fileadmin/media/kspg/Broschueren/Poduktbroschueren/Pierburg/S chadstoffreduzierung/pb sec air d.pdf

DE 10 2008 050 252 A1 beschreibt ein Sekundärluftventil für eine Brennkraftmaschine. Dieses weist ein Gehäuse mit einer hierin beweglichen Ventileinheit auf, die elektromagnetisch angetrieben ist. Durch die bewegliche Ventileinheit kann ein Fluidstrom von einem Eingang zu einem Ausgang gesteuert werden. Weiterhin ist ein Druckerfassungsraum vorgesehen, in dem ein Drucksensor angeordnet ist. Dieser Druckerfassungsraum ist fluidisch mit dem Fluideingang des Ventils verbunden.

US 2005/025204732 A1 beschreibt ebenfalls ein Sekundärluftventil für eine Brennkraftmaschine. Das Sekundärluftventil ist mit einem Drucksensor ausgestattet der in Silkonsubstrat eingebettet und damit integraler Bestandteil des Sekundärluftventils ist. Ferner wird Wert darauf gelegt die Geometrie eines Druckerfassungsraumes derart zu gestalten, dass keine Ablagerungen an den Drucksensor gelangen.

Bei Sekundärluftventilen mit Drucksensor ist das Problem bekannt, dass der Drucksensor durch Chemikalien, die sich im Sekundärluftsystem befinden, beschädigt wird. Zwar ist es bekannt, den Drucksensor durch eine Vergussmasse zu verkapseln. Jedoch können Schadstoffe durch die Vergussmasse hindurch diffundieren und beispielsweise eine Korrosion am Drucksensor verursachen. Die Korrosion kann beispielsweise an Bond-Pads auftreten und zu einem Abheben der zugehörigen Bonddrähte führen. Hierdurch kommt es zu einem Ausfall des Drucksensors.

Zur Lösung des Problems ist es aus dem Stand der Technik bekannt, den Drucksensor außerhalb des Sekundärluftventils anzuordnen, um bei einem Ausfall des Drucksensors diesen leichter austauschen zu können.

Aufgabe der Erfindung ist es, ein Sekundärluftventil für eine Sekundärluftpumpe bereit zu stellen, das einen ausfallsicheren Betrieb gewährleistet.

Die Lösung der Aufgabe erfolgt erfindungsgemäß durch die Merkmale des Anspruchs 1.

Das erfindungsgemäße Sekundärluftventil weist einen Drucksensor zum Messen des Sekundärluftdrucks im Sekundärluftventil auf. Der Drucksensor ist zu seinem Schutz durch eine Vergussmasse verkapselt. Erfindungsgemäß ist in die Vergussmasse eine Opferanode zum Verhindern einer Korrosion elektrischer Komponenten des Drucksensors und anderer metallischer Komponenten der Elektronik eingebettet.

Versuche haben gezeigt, dass es sich bei den Schadstoffen, die den Drucksensor angreifen, um Halogene handelt, welche beispielsweise an Kunststoff- oder Gummiteilen ausgasen können. Diese diffundieren durch die Vergussmasse, so dass durch die Vergussmasse allein kein ausreichender Schutz des Drucksensors sichergestellt werden kann.

Durch das erfindungsgemäße Einbringen einer Opferanode in die Vergussmasse erfolgt eine Reaktion dieser Schadstoffe mit der Opferanode, so dass diese anstelle der elektrischen Komponenten des Drucksensors korrodiert. Ein Ausfall des Drucksensors kann somit wirkungsvoll vermieden werden. Hierzu kann die Opferanode derart ausgelegt werden, dass sie an die geforderte Lebensdauer des Drucksensors angepasst wird, das heißt während der gesamten Lebensdauer des Drucksensors ihre Aufgabe zuverlässig erfüllt.

Es ist bevorzugt, dass der Drucksensor auf einer Platine angebracht ist, deren Oberfläche durch die Vergussmasse wenigstens teilweise abgedeckt ist. Neben dem Drucksensor können weitere elektrische Komponenten in der Vergussmasse eingebettet sein, die ebenfalls durch die Opferanode vor Korrosion geschützt werden können.

Die Opferanode muss ein Material aufweisen, das mit den vorhandenen Schadstoffen (z.B. Halogene) reagieren kann. Versuche haben gezeigt, dass es sich bei den Schadstoffen beispielsweise um Diiodmethan handeln kann, das sich im Sekundärluftsystem befindet. Die Opferanode kann somit beispielsweise aus Silber ausgebildet sein.

Es ist bevorzugt, dass die Opferanode zur Vergrößerung ihrer effektiven Oberfläche Nanopartikel, insbesondere Nanosilber aufweist. Hierdurch kann eine hohe Reaktionsfähigkeit erzielt werden, da beispielsweise ein Gramm Nanosilber eine Oberfläche von 60 m² aufweist.

Weiterhin kann die Opferanode im Vergießprozess eingebracht werden, währenddessen der Drucksensor durch die Vergussmasse eingekapselt wird. Bei der Auswahl des Materials der Vergussmasse ist darauf zu achten, dass die Opferanode nicht als Inhibitor des Vernetzungsprozesses oder als Katalysator wirkt. Bevorzugt weist die Opferanode somit ein Material auf, das gegenüber der Vergussmasse und/oder ihren Ausgangsstoffen inert ist.

In einer bevorzugten Ausführungsform ist der Drucksensor in einem Einlassstutzen des Sekundärluftventils angebracht.

Bei dem Sekundärluftventil kann es sich um ein elektrisches Sekundärluftventil handeln.

In einer weiteren bevorzugten Ausführungsform sind die elektrischen Komponenten durch eine elektrisch isolierende Schicht abgedeckt, über der die Vergussmasse mit der eingebetteten Opferanode angeordnet ist. Durch die elektrisch isolierende Schicht wird somit ein Kurzschließen der elektrischen Komponenten durch die elektrisch leitende Opferanode verhindert. Die elektrisch isolierende Schicht kann beispielsweise durch die Vergussmasse selbst ausgebildet sein, indem in dem Teil der Vergussmasse, der den elektrischen Komponenten benachbart ist, keine Opferanode angeordnet ist, die beispielsweise einen Kurzschluss von zu schützenden Halbleiterbahnen hervorrufen könnte. Anders ausgedrückt wird hierdurch vermieden, dass die Partikel in der Vergussmasse, die als Opferanode dienen, mit den Halbleiterbahnen oder anderen zu schützenden elektrischen Komponenten in Berührung kommen, wenn hierdurch die Gefahr bestünde, dass einzelne Bahnen durch die Partikel in der Vergussmasse überbrückt werden und damit Kurzschlüsse ausgelöst werden könnten. Wichtig bei dieser Ausführungsform ist, dass das Medium, welches die Korrosion verursacht, die Vergussmasse mit den dort eingebetteten Opferanoden passieren muss und somit mit der Opferanode reagiert und nicht mit den zu schützenden elektrischen Bauteilen. Die Opferanode in der Vergussmasse fängt sozusagen das schädliche Medium ein und reagiert mit diesem, bevor dieses zu den zu schützenden elektrischen Komponenten vordringen kann.

Im Folgenden werden bevorzugte Ausführungsformen der Erfindung anhand von Figuren erläutert.

Es zeigen:
Figur 1 ein Sekundärluftsystem gemäß dem Stand der Technik.
Figur 2 eine Ausführungsform eines erfindungsgemäßen Sekundärluftventils.
Figur 3 die Anordnung einer erfindungsgemäßen Opferanode in der Vergussmasse.

Figur 1 wurde bereits in Zusammenhang mit dem Stand der Technik erläutert.

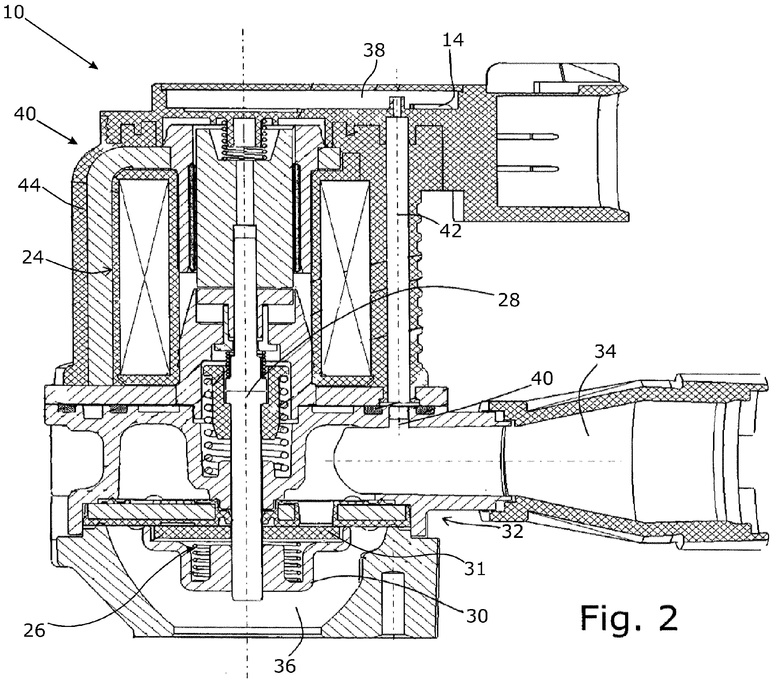

Figur 2 zeigt eine Ausführungsform eines erfindungsgemäßen Sekundärluftventils 10 für eine Sekundärluftpumpe 12. Das Sekundärluftventil 10 weist eine elektromagnetische Antriebseinheit 24 auf, durch die eine Ventileinheit 26 angetrieben werden kann. Diese Ventileinheit weist eine Ventilstange 28 und einen Ventilverschlusskörper 30 sowie eine Rückschlagklappe 31 auf. Ferner ist ein Gehäuse 32 vorgesehen, das einen Fluideingang 34 und einen Fluidausgang 36 besitzt. Die bewegliche Ventileinheit 26 steuert den Fluidstrom vom Fluideingang 34 zum Fluidausgang 36.

Es ist ferner ein Druckerfassungsraum 38 vorgesehen, in dem der Drucksensor 14 angeordnet ist. Der Druckerfassungsraum 38 ist über eine Öffnung 40 fluidisch mit dem Fluideingang 34 verbunden. Der Druckerfassungsraum 38 ist innerhalb eines Gehäuses 44 des Sekundärluftventils 10 angeordnet und über einen Verbindungskanal 42 mit der Öffnung 40 fluidisch verbunden. Die grundsätzliche Funktionalität eines Sekundärluftventils kann entsprechend des Sekundärluftventils ausgebildet sein, das in DE 10 2008 050 252 A1 beschrieben ist.

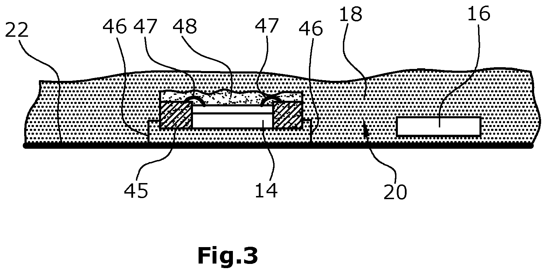

Figur 3 zeigt eine mögliche Anordnung von Opferanoden 20 in einer Vergussmasse 18. Auf der Platine 22 ist ein Gehäuse 45 angeordnet, in dem der Drucksensor 14 aufgenommen ist. Die elektrische Verbindung zur Platine 22 wird über die Lötverbindung 46 hergestellt. Die elektrische Verbindung zum Drucksensor 14 wird über eine Bondverbindung 47 hergestellt.

Der Drucksensor 14 ist innerhalb des Gehäuses 45 in eine Vergussmasse 48, die keine Opferanoden aufweist, eingebettet. Das Gehäuse 45 ist dagegen in eine Vergussmasse 18 eingebettet, die eine Vielzahl von Opferanoden 20 aufweist. Hierin eingebettet können weitere elektrische Bauteile 16, beispielsweise SMD-Bauteile sein.

Durch die in die Vergussmasse 18 eingebetteten Opferanoden 20 wird verhindert, dass elektrische Komponenten 14, 16 des Drucksensors korrodieren, was zum Ausfall dieser Komponenten führen kann.

## Patentansprüche

1. Sekundärluftventil (10) für eine Sekundärluftpumpe (12), wobei das Sekundärluftventil (10) aufweist:
einen Drucksensor (14) zum Messen des Sekundärluftdrucks im Sekundärluftventil (10),
wobei der Drucksensor (14) zu seinem Schutz durch eine Vergussmasse (18) verkapselt ist,
**gekennzeichnet durch,**
eine in die Vergussmasse (18) eingebettete Opferanode (20) zum Verhindern einer Korrosion elektrischer Komponenten (14, 16) des Drucksensors.

2. Sekundärluftventil (10) für eine Sekundärluftpumpe (12) nach Anspruch 1,
**dadurch gekennzeichnet, dass**
der Drucksensor (14) auf einer Platine (22) angebracht ist, deren Oberfläche durch die Vergussmasse (18) wenigstens zum Teil abgedeckt ist.

3. Sekundärluftventil (10) für eine Sekundärluftpumpe (12) nach Anspruch 1 oder 2,
**dadurch gekennzeichnet, dass**
die Opferanode (20) zur Vergrößerung ihrer effektiven Oberfläche Nanopartikel, insbesondere Nanosilber aufweist.

4. Sekundärluftventil (10) für eine Sekundärluftpumpe (12) nach Anspruch 1 bis 3,
**dadurch gekennzeichnet, dass**
der Drucksensor (14) in einem Einlassstutzen (24) des Sekundärluftventils (10) angebracht ist.

5. Sekundärluftventil (10) für eine Sekundärluftpumpe (12) nach Anspruch 1 bis 4,
**dadurch gekennzeichnet, dass**
das Sekundärluftventil (10) ein elektrisches Sekundärluftventil ist.

6. Sekundärluftventil (10) für eine Sekundärluftpumpe (12) nach Anspruch 1 bis 5,
**dadurch gekennzeichnet, dass**
die Opferanode (20) ein Material aufweist, das gegenüber der Vergussmasse (18) und/oder ihren Ausgangsstoffen inert ist.

7. Sekundärluftventil (10) für eine Sekundärluftpumpe (12) nach Anspruch 1 bis 6,
**dadurch gekennzeichnet, dass**
die elektrischen Komponenten (14, 16) durch eine elektrisch isolierende Schicht abgedeckt sind, über der die Vergussmasse (18) mit der eingebetteten Opferanode (20) angeordnet ist, so dass durch die elektrisch isolierende Schicht ein Kurzschluss der elektrischen Komponenten (14, 16) durch die Opferanode (20) verhindert wird.

## Claims

1. A secondary air valve (10) for a secondary air pump (12), wherein the secondary air valve (10) comprises:
a pressure sensor (14) for measuring the secondary air pressure in the secondary air valve (10),
the pressure sensor (14) being encapsulated for its protection by a casting compound (18),
**characterized by**
a sacrificial anode (20) embedded in the casting compound (18) for preventing corrosion of electrical components (14, 16) of the pressure sensor.

2. Secondary air valve (10) for a secondary air pump (12) according to claim 1, **characterized in that** the pressure sensor (14) is mounted on a circuit board (22), the surface of which is at least partially covered by the casting compound (18).

3. Secondary air valve (10) for a secondary air pump (12) according to claim 1 or 2, **characterized in that** the sacrificial anode (20) comprises nanoparticles, in particular nanosilver, in order to increase its effective surface.

4. Secondary air valve (10) for a secondary air pump (12) according to one of claims 1 to 3, **characterized in that** the pressure sensor (14) is mounted in an inlet port of the secondary air valve (10).

5. Secondary air valve (10) for a secondary air pump (12) according to one of claims 1 to 4, **characterized in that** the secondary air valve (10) is an electric secondary air valve.

6. Secondary air valve (10) for a secondary air pump (12) according to one of claims 1 to 5, **characterized in that** the sacrificial anode (20) comprises a material inert to the casting compound (18) and/or its starting materials.

7. Secondary air valve (10) for a secondary air pump (12) according to one of claims 1 to 7, **characterized in that** the electrical components (14, 16) are covered by an electrically insulating layer, over which the casting compound (18) with the embedded sacrificial anode (20) is arranged, so that a short circuit of the electrical components (14, 16) via the sacrificial anode (20) is prevented by the electrically insulating layer.

## Revendications

1. Vanne d'air secondaire (10) pour une pompe à air secondaire (12), ladite vanne d'air secondaire (10) comprenant:
un capteur de pression (14) pour mesurer la pression d'air secondaire dans la vanne d'air secondaire (10),
le capteur de pression (14) étant encapsulé pour sa protection par un scellement (18),
**caractérisée en ce que**, dans le scellement (18), une anode sacrificielle (20) incorporée est utilisée pour empêcher la corrosion des composants électriques (14, 16) du capteur de pression.

2. Vanne d'air secondaire (10) pour une pompe à air secondaire (12) selon la revendication 1, **caractérisée en ce que** le capteur de pression (14) est monté sur un circuit imprimé (22), dont la surface est au moins partiellement recouverte par le scellement (18).

3. Vanne d'air secondaire (10) pour une pompe à air secondaire (12) selon la revendication 1 ou 2, **caractérisée en ce que** l'anode sacrificielle (20) comprend des nanoparticules, notamment nano-argent, pour augmenter sa surface effective.

4. Vanne d'air secondaire (10) pour une pompe à air secondaire (12) selon les revendications 1 à 3, **caractérisée en ce que** le capteur de pression (14) est monté dans un orifice d'entrée de la vanne d'air secondaire (10).

5. Vanne d'air secondaire (10) pour une pompe à air secondaire (12) selon les revendications 1 à 4, **caractérisée en ce que** la vanne d'air secondaire (10) est une vanne d'air secondaire électrique.

6. Vanne d'air secondaire (10) pour une pompe à air secondaire (12) selon les revendications 1 à 5, **caractérisée en ce que** l'anode sacrificielle (20) comprend un matériau inerte par rapport au scellement (18) et/ou ses matériaux de départ.

7. Vanne d'air secondaire (10) pour une pompe à air secondaire (12) selon les revendications 1 à 6, **caractérisée en ce que** les composants électriques (14, 16) sont recouverts d'une couche d'isolation électrique, sur laquelle le scellement (18) avec l'anode sacrificielle (20) incorporée est agencé de sorte qu'un court-circuit des composants électriques (14, 16) à travers l'anode sacrificielle (20) soit empêché par la couche d'isolation électrique.
